# EUROPEAN PATENT APPLICATION

(11) **EP 2 172 726 A1**
(43) Date of publication of application: **07.04.2010**
(21) Application number: 08777468.3
(22) Date of filing: 20.06.2008
(51) Int. Cl.: F27D 17/00, C21B 13/10, F27B 9/18, F27B 9/30, C22B 7/02

(54) **APPARATUS AND METHOD FOR TREATING WASTE GAS FOR ROTARY HEARTH FURNACE-TYPE REDUCING FURNACE**

(30) Priority: 10.07.2007 JP 2007181217
(71) Applicant: Kabushiki Kaisha Kobe Seiko Sho, Chuo-ku Kobe-shi Hyogo 651-8585 (JP)
(72) Inventor: SUGITATSU, Hiroshi, Hyogo 651-8585 (JP); HARADA, Takao, Hyogo 651-8585 (JP); FUJIMOTO, Hideaki, Hyogo 651-8585 (JP)
(74) Representative: Müller-Boré & Partner Patentanwälte
(86) International application number: PCT/JP2008/061324
(87) International publication number: WO 2009/008256

(57) **Abstract**

Provided are an exhaust gas processing system and method capable of effectively utilizing the sensible heat of an exhaust gas for preheating air for burner combustion in a rotary hearth type reducing furnace while preventing troubles caused by adhesion of dust such as blockage in an exhaust gas processing facility for a rotary hearth type reducing furnace and corrosive deterioration in the facility without increasing the facility costs excessively. The system comprises a radiant heat exchanger 2 for heat exchange between an exhaust gas exhausted from the rotary hearth type reducing furnace and air. The radiant heat exchanger 2 includes an inner cylinder 22 made of metal surrounding a space through which the exhaust gas flows; an outer cylinder 21 disposed on an outer side in a radial direction of the inner cylinder to define a flow channel between the inner cylinder and the outer cylinder 21 for allowing the air to flow so as to exchange heat with the exhaust gas; and a highly thermal conductive refractory 23 applied to an inner side of the inner cylinder 22 so as to cover an inner surface thereof.

## Description

### Technical Field

The present invention relates to a system and a method for processing an exhaust gas generated in a rotary hearth type reducing furnace (hereinafter, referred to also as the rotary hearth furnace) by reducing carbon composite metal oxide agglomerates, and more particularly, relates to a structure of a heat exchanger for effective recovery of the sensible heat of the exhaust gas and an exhaust gas processing technique using the structure.

### Background Art

There is limited a conventional reduced iron manufacturing process by a requirement of an expensive natural gas as a reductant and a location of the plant which is normally restricted to a producing region of the natural gas. Under these circumstances, attention has been recently focused on a method of manufacturing reduced iron using coal as the reductant; coal is relatively inexpensive and eases the geographical restriction on the plant location.

For example, Patent Document 1 discloses such a manufacturing method of reduced iron using coal as the reductant, the method comprising charging carbon composite metal oxide agglomerates (hereinafter, simply referred to also as agglomerates) that is a mass of a powdery mixture of iron ore and coal into a rotary hearth furnace and heating the agglomerates under high-temperature atmosphere to reduce it.

In this process, for effective use of the sensible heat of the exhaust gas, the first stage in an exhaust gas channel is provided with a heat exchanger to cool the exhaust gas indirectly by air and to preheat the air, which is utilized for burner combustion to heat the rotary hearth furnace. The heat exchange between the high-temperature exhaust gas and the air for burner combustion as above can raise the preheating temperature of the air for burner combustion sufficiently to achieve a reduced iron manufacturing process with an excellent energy efficiency.

In addition, by using steel mill waste instead of the iron ore, this process is now being applied to a waste processing process to remove zinc, lead, and so forth in the raw material by means of reducing evaporation.

In a case where the steel mill waste is used as a raw material, zinc and lead in the agglomerates are reduced and evaporate in the form of metal vapor or evaporate in the form of chloride in part under high-temperature atmosphere inside the rotary hearth furnace to be isolated and removed from the agglomerates, thereby producing a large volume of dust containing not only the zinc and the lead but also other impurity elements, such as alkaline metal and halogen. When the dust is introduced into an exhaust gas processing facility outside the furnace together with the exhaust gas, the dust firmly adheres onto a metal heat transfer surface in the heat exchanger, a duct surface or the like, and grows up there. The growth of the dust deteriorates the heat transfer efficiency of the heat exchanger, blocks the exhaust gas flow channel, or shortens the life of the facility caused by metal corrosion.

There have been made the following various proposals as countermeasures against such problems as the adherence of the dust causing blockage in the exhaust gas processing facility for the rotary hearth furnace or early corrosive deterioration of the facility.

1) Patent Documents 2 and 3 disclose a method comprising installing a waste heat boiler using a water coolant for the first stage of the exhaust gas processing for the rotary hearth furnace, installing a heat exchanger using an air coolant for the next stage, controlling the inner surface temperature of the waste heat boiler to be 400°C or below and removing dust adhering onto the inner surface of the waste heat boiler by means of soot blow or by the hammering mechanism.

This method, however, requires an addition of the waste heat boiler to the exhaust gas processing facility, which involves an increase in the facility costs. Further, the inlet gas temperature of the heat exchanger at the latter stage controlled to be, for example, as low as about 600°C prevents sufficiently raising the temperature of the preheating air for burner combustion in comparison with the process described in Patent Document 1 using the heat exchanger provided at the first stage of the exhaust gas processing. This deteriorates the energy efficiency of the rotary hearth furnace. In addition, this method requires mechanical dust removing means such as soot blow or the hammering mechanism, which is likely to cause facility troubles.

2) Patent Document 4 discloses a method comprising installing a radiant heat exchanger using an air coolant for the first stage in the exhaust gas processing facility for the rotary hearth furnace to lower the temperature of the exhaust gas flowing out from the rotary hearth furnace, which is about 1200°C, to about 1000°C, thereafter precooling the gas to about 750°C in a water-cooled duct and further rapidly cooling the gas to 250°C or below by introducing cold air into the exhaust gas.

This method, as with the method described in Patent Document 1 above, also cannot avoid the problems, such as adhesion of dust onto the inner surface of the heat exchanger or corrosive deterioration of the inner surface.

3) Patent Document 5 discloses an heat transfer tube for heat exchanger which tube has an outer cylinder formed of porous ceramic chiefly made of SiC. This heat transfer tube is a single tube formed of ceramic alone; the use of which is extremely restricted. Specifically, this type of cylinder is capable of ensuring a required strength in a case where its diameter is small, while hard to use due to its insufficient strength in a case where a considerably large inner diameter is required, for example, when there is a need to let a large volume of exhaust gas pass through the interior of the tube.
Patent Document 1: JP-A-11-279611
Patent Document 2: JP-A-2000-169906
Patent Document 3: JP-A-2003-90686
Patent Document 4: JP-A-11-342314
Patent Document 5: JP-A-2001-48650

### Disclosure of the Invention

In view of the foregoing, the present invention has an object to provide exhaust gas processing system and method capable of effectively utilizing the sensible heat of an exhaust gas for preheating air for burner combustion in the rotary hearth type reducing furnace while preventing troubles due to adhesion of dust, such as blockage in the exhaust gas processing facility for the rotary hearth type reducing furnace and corrosive deterioration of the facility, without excessive increase in equipment cost.

In order to accomplish the object, an exhaust gas processing system for a rotary hearth type reducing furnace of the invention includes a radiant heat exchanger configured to perform a heat exchange between an exhaust gas exhausted from the rotary hearth type reducing furnace and a coolant, the radiant heat exchanger including: an inner cylinder made of metal surrounding a space through which the exhaust gas flows; an outer cylinder disposed on an outer side in a radial direction of the inner cylinder to define a flow channel between the inner cylinder and the outer cylinder for allowing air to flow therethrough so as to exchange heat with the exhaust gas; and a highly thermal conductive refractory applied on an inner side of the inner cylinder so as to cover an inner surface of the inner cylinder.

Also, an exhaust gas processing method for a rotary hearth type reducing furnace of the invention includes introducing an exhaust gas exhausted from the rotary hearth type reducing furnace into a heat exchanger for heat exchange between the exhaust gas and air to preheat the air, wherein the heat exchanger is a radiant heat exchanger that includes: an inner cylinder surrounding a space through which the exhaust gas flows; an outer cylinder disposed on an outer side in a radial direction of the inner cylinder to define a flow channel between the inner cylinder and the outer cylinder for allowing the air to flow therethrough; and a highly thermal conductive refractory disposed so as to cover an inner surface of the inner cylinder.

### Brief Description of the Drawings

FIG. 1 is a flow diagram schematically showing the configuration of an exhaust gas processing system for a rotary hearth type reducing furnace according to an embodiment of the invention.
FIG. 2 is a perspective view showing in detail a radiant heat exchanger included in the exhaust gas processing system.
FIG. 3 is a graph showing the relation between the elapsed number of days for operation and the overall heat transfer coefficient on the heat transfer surface of the radiant heat exchanger in a case where an SiC content in a silicon carbide refractory is 60% by mass.
FIG. 4 is a graph showing the relation between the elapsed number of days for operation and the preheating air temperature in a case where an SiC content in a silicon carbide refractory is 60% by mass.
FIG. 5 is a graph showing the relation between the elapsed number of days for operation and the overall heat transfer coefficient on the heat transfer surface of the radiant heat exchanger in a case where an SiC content in a silicon carbide refractory is 80% by mass.
FIG. 6 is a graph showing the relation between the elapsed number of days for operation and the preheating air temperature in a case where an SiC content in a silicon carbide refractory is 80% by mass.
FIG. 7 is a cross section showing the temperature profile on the heat transfer surface of the radiant heat exchanger.
FIG. 8 is a flow diagram schematically showing the configuration of an exhaust gas processing system for a rotary hearth type reducing furnace according to a comparative example.

### Best Mode for Carrying Out the Invention

Hereinafter, preferred embodiments of the invention will be described in detail with reference to the drawings.

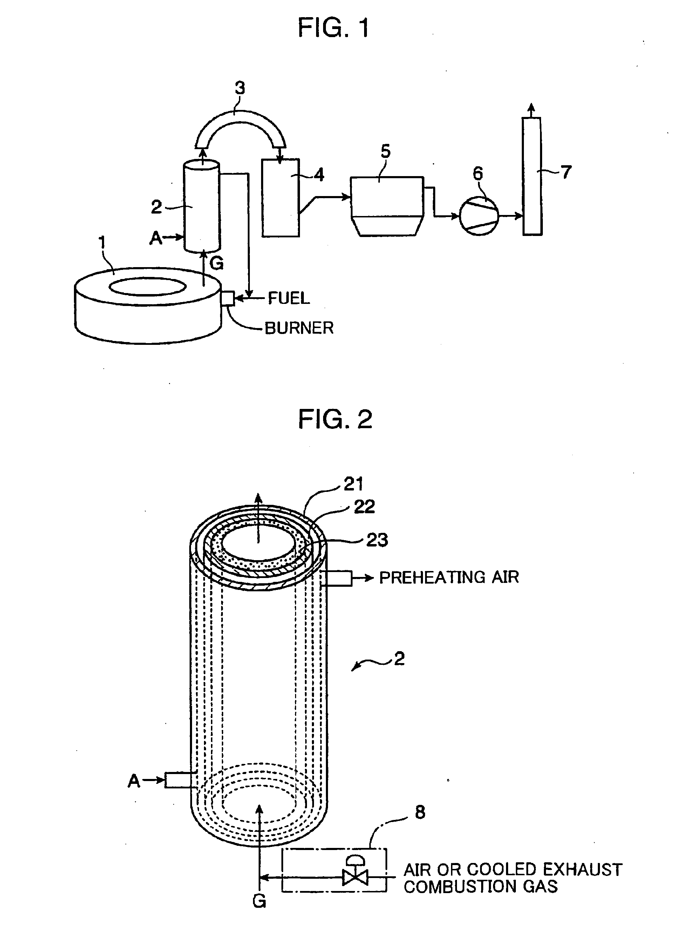

FIG. 1 schematically shows the configuration of an exhaust gas processing system for a rotary hearth type reducing furnace according to one embodiment of the invention. The exhaust gas processing system includes a rotary hearth furnace 1 that exhausts an exhaust gas G, a radiant heat exchanger 2 that performs a heat exchange between the exhaust gas G exhausted from the rotary hearth furnace 1 and air A for burner combustion used in the rotary hearth furnace 1, an exhaust gas cooling tower 4 connected to an outlet of the heat exchanger 2 via a refractory duct 3 to rapidly cool the exhaust gas introduced therein via the refractory duct 3, a dust collector 5 that applies dust removal processing to the rapidly cooled exhaust gas, and an induced draft fan 6 that exhausts the exhaust gas to which the dust removal has been applied, through a stack 7.

Hereinafter, a further detailed description will be given along the flow of the exhaust gas G.

### Heat Exchanger 2

From the rotary hearth furnace 1 is exhausted the exhaust gas G having a temperature of 1100 to 1450°C . The high-temperature exhaust gas, the temperature of which is adjusted (described in detail below) as needed, is introduced into the heat exchanger 2 to exchange heat with the air A for burner combustion used in the rotary hearth furnace 1.

FIG. 2 shows the heat exchanger 2 in detail. The heat exchanger 2 includes an outer cylinder 21 made of metal, an inner cylinder 22 made of metal and disposed on the inner side of the outer cylinder 21 so as to keep a distance from the inner surface thereof, and a highly thermal conductive refractory 23 laid on the inner cylinder 22 so as to cover the inner surface of the inner cylinder 22. The inner cylinder 22 and the refractory 23 surround an exhaust gas flow channel through which the exhaust gas G as the heat source is flown. Meanwhile, the inner cylinder 22 and the outer cylinder 21 define an air flow channel therebetween for allowing the air A as a coolant to flow through the air flow channel. Examples of suitable metals forming the inner cylinder 22 and the outer cylinder 21 include but not limited to steel plates made of carbon steel and stainless steel.

Dust contained in the exhaust gas G at high concentration comes into contact with the surface of the highly thermal conductive refractory 23 and is cooled to turn into a solid , thus eventually forming an adhesion layer on the surface. However, the adhesion layer of the dust formed on the surface of the highly thermal conductive refractory 23 hardly grows because it is brittle and readily peels off, thus having a small thickness. The adhesion layer therefore hardly gives influences to the heat transfer efficiency of the heat exchanger 2 and will never block the exhaust gas flow channel.

The refractory 23 covers the inner surface of the inner cylinder 22 to inhibit corrosive dust from direct contact with the inner cylinder 22, thereby prevents corrosive deterioration. The thin adhesion layer of the dust formed on the surface of the refractory 23 can rather contribute to prevention of abrasion or wear of the refractory 23 due to contact with the dust flowing with the exhaust gas. This eliminates the need for the mechanical removing means for removing dust during operation as are disclosed in Patent Documents 2 and 3. Although increase in the thickness of the adhesion layer of the dust is capable of deteriorating the heat transfer efficiency or causing a blockage of a flow channel of the exhaust gas, the adhesion layer of the dust is so brittle and so likely to peel off that the removal of the adhesion layer is easy. For example, the removal can be easily performed by preliminarily forming maintenance holes at the inlet portion and the outlet portion of the heat exchanger and inserting a metal rod into the heat exchanger through the maintenance holes to poke the adhesion layer at the time of maintenance inserted.

Further, temporarily lowering the temperature of the surface of the highly thermal conductive refractory 23 below the temperature of the surface during the reduction operation can provide the dust layer adhering onto the surface with cracking which promotes peeling of the dust layer in. This makes it possible to easily remove the dust layer without a work of inserting a rod or the like through the maintenance holes provided in advance to poke the dust layer.

It is sufficient to perform this operation once a month for example. The time for each operation (a time over which the temperature is lowered) preferably continues for 8 to 12 hours in accordance with the daily maintenance or the like. However, even an operation over a time as short as 30 minutes to 1 hour also can achieve the effect described above.

This operation can be performed while the raw material is charged into the rotary hearth furnace; however, it is preferably performed as idle driving when no raw material is charged, specifically during the daily maintenance or the like. For example, setting the heat exchanger inlet temperature to 1,350°C during the reduction operation and setting the heat exchanger inlet temperature to 1,050°C (that is, lowering the gas temperature by about 300°C) during the idle driving, can cause thermal contraction in the dust layer adhering onto the surface of the highly thermal conductive refractory 23 to form the cracking therein, which can promote the peeling of the dust layer.

An amount of the exhaust gas and an amount of combustion air during the idle driving are smaller than those during the reduction operation. For example, an amount of the exhaust gas, which is 11,700 Nm³/h during the reduction operation, decreases to about 6,000 Nm³/h, and an amount of preheating air, which is 13,100 Nm³/h during the reduction operation, decreases to about 6,000 Nm³/h. However, intentional increase in an amount of preheating air during the idle driving also can lower the surface temperature of the highly thermal conductive refractory 23, and extra preheating air generated by the increase may be released to atmosphere.

Examples of the highly thermal conductive refractory 23 include refractory containing SiC, ZrB₂, and BN having high thermal conductivity as a main constituent. The refractory excel not only in thermal conductivity but also in wear resistance and corrosion resistance. Accordingly, they are preferable in terms of resistance against an exhaust gas from the rotary hearth furnace that contains corrosive dust at high concentration.

Among all, the most strongly recommended is a refractory containing SiC as a main constituent (silicon carbide refractory), which is relatively inexpensive. A silicon carbide refractory which contains more SiC is more preferable in terms of ensuring the thermal conductivity. The SiC content is preferably 60% or greater by mass and more preferably 70% or greater by mass. The thermal conductivity of the silicon carbide refractory is, for example, 4. 65 W/ (mK) when the SiC content is 30% by mass, 8.72 W/(mK) when the SiC content is 60% by mass, and 11.1 W/(mK) when SiC content is 78% (the rest are Al₂O₃ and SiO₂ and the value of the thermal conductivity is indicated at 1,000°C in each case). In addition, refractory containing SiC as a main constituent has an advantage that its surface forms an SiO₂ membrane with excellent corrosive resistance.

The thinner the highly thermal conductive refractory 23, the more preferable to ensure an overall heat transfer coefficient of the heat exchanger 2; however, in consideration with the upper temperature limit of the inner cylinder 22 made of metal, wear of the refractory 23, applicability of the refractory 23 to the inner surface of the inner cylinder 22, and so forth taken into account, it is preferable to adjust the thickness in a range of 30 mm to 100 mm both inclusive as needed. The refractory 23 can be applied, for example, by welding plural anchors made of metal to the inner surface of the inner cylinder 22, installing a framework, and injecting a castable refractory into the framework. the castable refractory is preferably injected by means of vibration filling, which increases the denseness of the refractory applied to prevent deterioration of thermal conductivity and suppress adhesion of dust. Further, the refractory is preferably finished with a smooth surface. It is important to control moisture during application.

The temperature of the exhaust gas G to be introduced into the heat exchanger 2 (that is, the gas at the inlet of the heat exchanger 2) is preferably adjusted, by specific heat exchanger inlet gas temperature control means 8, to the target temperature of 1,100°C or above and more preferably 1,200°C or above but lower than the temperature of the exhaust gas G exhausted from the rotary hearth furnace 1. The conventional heat exchanger without the refractory for covering the inner surface of the inner cylinder made of metal limits the temperature of the exhaust gas to be introduced therein to about 1,000°C or lower because of the restriction by the heat resistance of the inner cylinder, while the exhaust gas processing system of the invention comprises the refractory covering the inner surface of the inner cylinder to allow a high-temperature exhaust gas to be introduced therein.

As the heat exchanger inlet gas temperature control means 8, preferably used is a means of introducing air into the exhaust gas G from the rotary hearth furnace 1 or a means of introducing a cooled exhaust combustion gas into the exhaust gas G , for example. In addition, a means for directly spraying cooling water into the exhaust gas G or a means indirectly cooling the exhaust gas G by letting the exhaust gas G circulate through a water-cooled tube is also available.

While the control means using cooling water as described above decreases a total amount of the sensible heat of the exhaust gas G, the means for introducing air or a cooled exhaust combustion gas into the exhaust gas G allows the exhaust gas G to be introduced into the heat exchanger 2 without decrease in a total amount of the sensible heat, which can enhance the heat recovery efficiency. In particular, the means for introducing a cooled exhaust combustion gas into the exhaust gas G is more preferable because it can increase the radiation ratio of the exhaust gas G to increase an amount of radiant heat transfer in comparison with the means for introducing air since the exhaust combustion gas contains CO₂ components and H₂O components having a high radiation ratio.

As the cooled exhaust combustion gas may be used part of the exhaust gas G after the cooling and the dust removal drawn from the exit side of the dust collector 5 or the exit side of the induced draft fan 6 of the exhaust gas processing system, for example. Alternatively, an exhaust gas from a facility other than the exhaust gas processing system, for example, another combustion furnace or a drying furnace, may be used as the exhaust combustion gas.

In a case where the heat resistance of the refractory 23 is sufficient to eliminate particular limitation of the inlet temperature of the heat exchanger 2 , the control on the inlet temperature by the heat exchanger inlet gas temperature control means 8 (that is, the cooling of the exhaust gas G from the rotary hearth furnace 1) may be omitted, or the heat exchanger inlet gas temperature control means 8 may be adapted for raising the inlet temperature conversely, in order to increase the heat recovery rate in the heat exchanger 2. The omission of cooling of the exhaust gas G may increase the inlet temperature contrarily due to inflammable components, such as a CO gas, remaining in the exhaust gas G. Further, in a case where the exhaust gas G contains the inflammable components or a vapor of heavy metal such as zinc, an introduction of a gas containing oxygen (for example, air or an exhaust combustion gas) into the exhaust gas G can achieve promoting combustion (oxidation) of the inflammable components and the vapor to perform the control for actively raising the temperature of the exhaust gas G (that is, raising the heat exchanger inlet temperature).

The outlet temperature of the heat exchanger 2 is preferably maintained at a high temperature no lower than the pre-set temperature (for example, 700°C). This reduces an amount of dust adhering onto the surface of the highly thermal conductive refractory 23 inside the heat exchanger 2 to enable the operation over a longer period. The outlet temperature is possible to be adjusted by changing the setting of the inlet gas temperature of the heat exchanger 2 and/or changing a flow rate of air inside the heat exchanger 2. Since the components that evaporate by reactions inside the rotary hearth furnace 1 mostly contain low melting point compounds in a gaseous form and slightly contain compounds having a melting point exceeding 600°C, keeping the temperature of the surface of the highly thermal conductive refractory 23 no lower than 600°C effectively decreases an amount of dust adhering onto the surface.

Although in this embodiment is used only the single radiant heat exchanger 2, in the invention may be used a plurality of radiant heat exchangers interconnected in series and/or in parallel. The specific number and form of connection may be determined in comprehensive consideration with a manufacturing scale of the reduced metal (that is, a scale of amount of the exhaust gas to be generated), a location of installment, facility costs, and so forth.

Although illustrated in this embodiment is the radiant heat exchanger 2 of a parallel current flow type in which the exhaust gas G and air flow in the same direction, it may be of a countercurrent flow type in which the exhaust gas G and air flow in opposite directions.

### Refractory Duct 3, Exhaust Gas Cooling Tower 4, and Others

The exhaust gas G exhausted from the heat exchanger 2 is introduced into the exhaust gas cooling tower 4 through the refractory duct 3. The refractory duct 3 includes a duct main body made of metal and a refractory applied so as to cover at least a part of the inner surface of the duct main body (generally a high-temperature portion; preferably the entire portion).

The refractory duct 3 can be changed into a water-cooled duct. However, the refractory duct 3, the refractory of which protects the inner surface of the duct main body from corrosion, can have a longer life. In the water-cooled duct, decrease in the temperature of the duct surface prevents high-temperature corrosion (dissolved salt corrosion) on the inner surface of the duct to some extent; however, when there is generated a region having a temperature lower than the dew point of acid due to a drift of the exhaust gas or the like inside the duct, acid corrosion of the metal forming the duct main body may possibly occur in this region. On the contrary, the refractory of the refractory duct 3 can inhibit the exhaust gas from coming into contact with the inner surface (metal surface) of the duct main body to prevent both the high-temperature corrosion and the acid corrosion of the inner surface.

The refractory used for the refractory duct 3 is not limited to the highly thermal conductive refractory applied to the heat exchanger 2, but various kinds of refractory can be used with reference to the temperature during use. For example, an inexpensive alumina-silica refractory can be also used. In a case where the duct main body has an extensible tube portion for absorbing thermal expansion, to which the refractory is hard to be applied, a heat insulator such as glass wool may be applied to the extensible tube portion.

It is more preferable to apply the refractory as above also to the interior of the exhaust gas cooling tower 4 because of the same reason as described above. In this case, the exhaust gas temperature drops considerably in the downstream side portion of the exhaust gas cooling tower 4, which allows the refractory to be applied only to the upstream side portion. However, for the exhaust gas cooling tower in which the exhaust gas flows from top to bottom inside the tower, the refractory may be applied across the entire surface because application of the refractory only to the top portion that is the upstream side portion complicates the structure.

In a case where the exhaust gas contains chlorine components, the exhaust gas temperature at the inlet of the exhaust gas cooling tower 4 is set to 600°C or above and more preferably 800°C or above in order to suppress synthesis (resynthesis) of dioxins, and then the exhaust gas is rapidly cooled inside the exhaust gas cooling tower 4 to 200°C or below and more preferably 180°C or below. Even when the chlorine components or dioxins is contained in the raw material of the exhaust gas, rapid heat up of the raw material inside the rotary hearth furnace 1 under high-temperature atmosphere at 1,100°C or above almost prevents synthesis of dioxins from the chlorine components. Moreover, even the dioxins which can be present in the raw material will be almost completely decomposed. Hence, the hot exhaust gas G fresh out of the rotary hearth furnace 1 contains little dioxins.

The exhaust gas temperature at the inlet of the exhaust gas cooling tower 4 can be adjusted by changing the setting of the inlet gas temperature of the heat exchanger 2 or by changing a flow rate of air inside the heat exchanger 2, as with the adjustment of the outlet temperature of the heat exchanger 2.

Concerning the cooling rate of the exhaust gas in the exhaust gas cooling tower 4, preferable is such a rapid cooling (forced cooling) as to lower the temperature of the exhaust gas from 600°C to 200°C within 5 seconds. The rapid cooling is achieved, for example, by spraying water into the exhaust gas, introducing diluted air, making heat exchange with another fluid, or a combination of the foregoing.

Although the exhaust gas G in the embodiment is introduced into the exhaust gas cooling tower 4 from the heat exchanger 2 by way of the refractory duct 3, it is permitted to perform heat recovery using a waste heat boiler or a heat exchanger of another type before the exhaust gas G is introduced into the exhaust gas cooling tower 4.

Spraying of water and introduction of diluted air into the exhaust gas G inside the exhaust gas cooling tower 4 is performed on the precondition that the dust collector 5 for removing dust from the exhaust gas G exhausted from the exhaust gas cooling tower 4 is of a dry type using a bag filter or the like. In a case where a dust collector of a wet type, such as a Venturi scrubber that brings a large volume of cooling water into direct contact with an exhaust gas, is used as the dust collector 5, harmful impurity elements dissolve into the cooling water, which may require wastewater disposal separately.

The exhaust gas G cooled to 200°C or below and preferably 180°C or below in the exhaust gas cooling tower 4 is subjected to dust removal processing in the dust collector 5 formed of the bag filter or the like, and then exhausted to atmosphere through the stack 7 by the induced draft fan 6.

### Examples

### Example 1

### (Confirmation of the Effects of the Basic Configuration of the Invention)

In order to confirm the effects of the invention, experiments using the exhaust gas processing system shown in FIG. 1 were conducted. In Example 1 was used, as the radiant heat exchanger 2 , a exchanger including an inner cylinder 22 formed of a steel plate made of stainless steel with an inner diameter of 1.55 m, a length of 8.2 m, and a heat transfer area of 40 m² and a refractory 23 formed of a silicon carbide refractory (the SiC content is 60% by mass and the rest are chiefly Al₂O₃ and SiO₂) with the thickness of 50 mm and laid to the inner cylinder 22 by casting so as to cover the inner surface thereof. As the exhaust gas cooling tower 4 is used one in which spraying water and introduction of air at normal temperature into the exhaust gas is performed.

An exhaust gas at about 1,450°C was exhausted from the rotary hearth furnace 1 at a flow rate of about 11, 600 Nm³/h, and air at normal temperature was introduced into the exhaust gas at a flow rate of about 1, 130 Nm³/h to adjust the temperature of the exhaust gas to about 1,350°C. The exhaust gas subjected to the temperature adjustment was then introduced into the heat exchanger 2. Inside the heat exchanger 2, air at normal temperature as the coolant was flown at about 13,130 Nm³/h. The exhaust gas temperature at the inlet of the exhaust gas cooling tower 4 was controlled to be 800°C or above, and the exhaust gas temperature at the outlet of the exhaust gas cooling tower 4 was controlled to be 180°C or below. Inside the exhaust gas cooling tower 4, the exhaust gas was rapidly cooled so that the temperature of the exhaust gas dropped from 1, 070°C to 170°C in about 2 seconds.

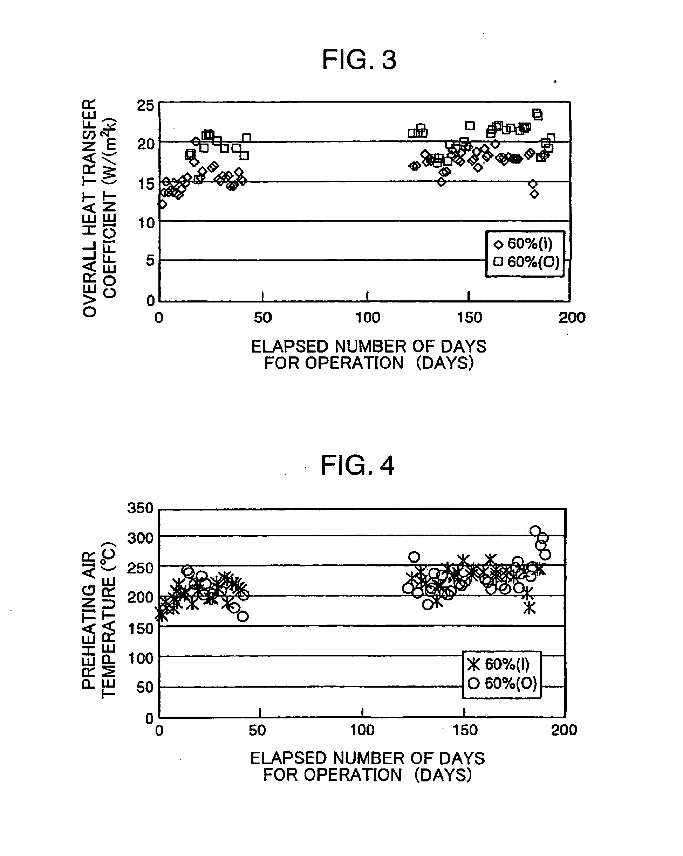

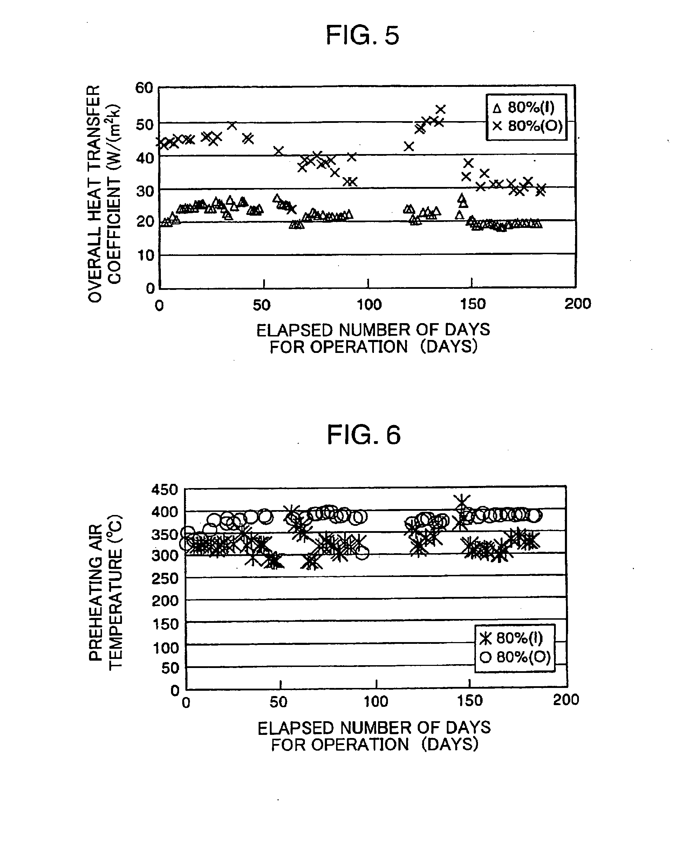

The operation was continued for about 190 days under the conditions specified above, while changes of the overall heat transfer coefficient and the preheating air temperature in the heat exchanger 2 were examined during this period. The results of the examination are set forth in FIG. 3 and FIG. 4. In these drawings, the indication of "60%" means that the SiC content in the silicon carbide refractory was 60% by mass. The marks with an indication of " (I) " represent data during idle driving when the rotary hearth furnace was heated merely to maintain the atmosphere temperature and no agglomerates were charged therein. The marks with an indication of "(O)" represent data during the reduction operation when agglomerates were charged into the rotary hearth furnace to manufacture reduced iron (the same applies to FIG. 5 and FIG. 6 described below).

As can be obvious from these drawings, noticeable changes were not observed in both the overall heat transfer coefficient and the preheating air temperature of the heat exchanger, even after the operation over a long period.
Furthermore, observation of the interior of the inner cylinder of the heat exchanger 2 after the operation over about 190 days showed that no falling off of the silicon carbide refractory was occurred and a thin adhesion layer, which was formed on the refractory surface, could be easily removed by an operator poking it manually with a metal rod.

These results show that applying the highly thermal conductive refractory to the inner cylinder of the heat exchanger so as to cover the inner surface (heat transfer surface) thereof makes it possible to effectively recover the sensible heat of the exhaust gas without the blockage of the exhaust gas flow channel and corrosion of the heat transfer surface caused by adhesion onto the heat transfer surface.

In addition, analysis of the components of the exhaust gas at the outlet of the dust collector 5 formed of a bag filter revealed no synthesis (resynthesis) of dioxins. The synthesis seems to be prevented by contribution of rapid cooling inside the exhaust gas cooling tower 4

### Example 2

### (Confirmation of Influence of SiC Content in Silicon Carbide Refractory)

In Example 2, in the exhaust gas processing system according to Example 1 above, a refractory having a SiC content of 80% by mass was used as the silicon carbide refractory applied on the inner side of the inner cylinder 22 of the heat exchanger 2 instead of the silicon carbide refractory having a SiC content of 60% by mass. The operation was continued for about 190 days under the operation conditions same as those in Example 1.

FIG. 5 and FIG. 6 show changes of the overall heat transfer coefficient and the preheating air temperature of the heat exchanger 2 during the operation period. In FIG. 5, data during the reduction operation on and after about 150 days contain a rather low overall heat transfer coefficient, which does not represent deterioration of the heat transfer performance but is attributed to a reduction in amount of heat exchange because of the heat exchange performed under conditions where an amount of the preheating air was smaller than the reference amount (about 13, 130 Nm³/h) specified above.

These drawings obviously show no significant changes in the overall heat transfer coefficient and the preheating air temperature of the heat exchanger during the operation over a long period as with Example 1 above. Moreover, the visual observation of the interior of the inner cylinder of the heat exchanger 2 after the operation over about 190 days showed that no falling off of the silicon carbide refractory were occurred and the refractory surface were covered with a thin adhesion layer, which was easily removable by a workman poking it manually with a metal rod, as with Example 1 above.

The following Table 1 indicates average values of the overall heat transfer coefficient and the preheating temperature during the respective periods shown in FIG. 3 through FIG. 6 for comparison.

**Table 1**

| | SiC: 60% by mass | | SiC: 80% by mass | |
|---|---|---|---|---|
| | During idling | During reduction operation | During idling | During reduction operation |
| Overall heat transfer coefficient [W/(m²K)] | 16.5 | 19.9 | 22.2 | 39.3 |
| Preheating temperature [°C] | 221 | 227 | 323 | 375 |

Table 1 shows that increase in the SiC content in the silicon carbide refractory from 60% by mass to 80% by mass elevates the overall heat transfer coefficient of the heat exchanger by about two times and the preheating air temperature by about 150°C during the reduction operation, respectively, which means that the heat transfer efficiency can be improved with an increase of the SiC content.

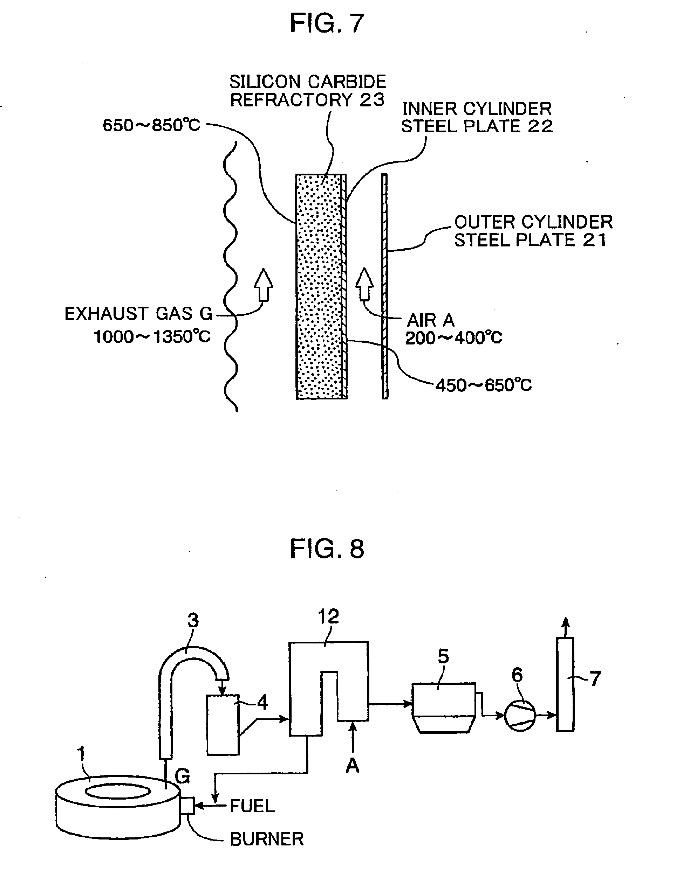

FIG. 7 shows the result of the calculation of the temperature profile in the vicinity of the heat transfer surface of the heat exchanger 2 during the reduction operation in a case where the silicon carbide refractory having the SiC content of 80% by mass is applied. FIG. 7 allows it to be estimated that the refractory surface temperature was always no higher than 850°C and the inner surface temperature of the inner cylinder steel plate is always no higher than 650°C, and these temperatures were well below the upper temperature limits of the respective materials.

### Example 3

### (Influence of Thickness of Silicon Carbide Refractory)

The thickness of the silicon carbide refractory was 50 mm in each of Examples 1 and 2 above. Refractory thickness of 100 mm reduces an amount of heat exchange by about 15% compared with the thickness of 50 mm, and thickness of 200 mm reduces an amount of heat exchange drops by about 27% compared with the thickness of 50 mm. It is therefore preferable that the highly thermal conductive refractory is made as thin as in its application.

### Example 4

### (Confirmation of Influence of Adjusting Means for Exhaust Gas Temperature at Heat Exchanger Inlet)

In Example 2 above, adjustment of the exhaust gas temperature at the heat exchanger inlet by introduction of air at normal temperature made the exhaust gas composition at the heat exchanger inlet 3.6% by volume of O₂, 7.6% by volume of CO₂, 14.6% by volume of H₂O, and 74.2% by volume of N₂.

In example 4, the exhaust gas temperature at the heat exchanger inlet was adjusted by introduction of a cooled exhaust combustion gas. Specifically, differently from Example 2 above, the temperature of the exhaust gas was adjusted to about 1,350°C by introducing, at a flow rate of about 1, 150 Nm³/h, the exhaust gas after the cooling and the dust removal (composition: 9.3% by volume of O₂, 5.0% by volume of CO₂, 28.6% by volume of H₂O, and 57.1% by volume of N₂, and the temperature: 170°C) taken out from the exit side of the induced draft fan 6 into the exhaust gas at about 1,450°C exhausted at a flow rate of 11,600 Nm³/h from the rotary hearth furnace 1 as in Example 2 above. The exhaust gas after the temperature adjustment was then introduced into the heat exchanger 2.

This experiment confirmed that an increase in the contents of CO₂ and H₂O contents with a high radiation ratio in the exhaust gas after the temperature adjustment achieved the average temperature at about 400°C higher than the average temperature (375°C) of the preheating air during reduction operation obtained in Example 2 above, further increasing an amount of the preheating air by about 25% in comparison with Example 2 above.

Moreover, it was confirmed that periodical idle operation (intentionally decreasing the inlet temperature of the heat exchanger 2) apart from the reduction operation under the conditions specified above could remove the dust effectively. Specifically, an operation for setting both the exhaust gas flow rate and the preheating air amount at the heat exchanger inlet to 6,000 Nm³/h to lower the exhaust gas temperature at the heat exchanger inlet to about 1,050°C for 12 hours, caused cracking in the dust layer adhering to the surface of the highly thermal conductive refractory 23 inside the heat exchanger 2 to peel off the dust layer, thus eliminating the need for poking work to remove the dust layer.

### Comparative Example 1

In a comparative example was used the exhaust gas processing system shown in FIG. 8, that is, an exhaust gas processing system including a rotary hearth furnace 1, a cooled-air duct 13, an exhaust gas cooling tower 4, a heat exchanger 12, a dust collector 5, an induced draft fan 6, and a stack 7. As the heat exchanger 12 was used a plate-type heat exchanger (heat transfer area 350 m²). The plate-type heat exchanger 12, in which no refractory was applied to the heat transfer surface thereof, requires cooling the exhaust gas in the exhaust gas cooling tower 4 to let the exhaust gas temperature at the inlet of the heat exchanger 12 have 400 to 600°C for suppressing the formation of the adhesion layer on the heat transfer surface and corrosion of the heat transfer surface.

Accordingly, there were performed rapidly spraying water and introducing diluted air inside the exhaust gas cooling tower 4 for the exhaust gas at about 1,450°C exhausted from the rotary hearth furnace 1 at a flow rate of about 11,600 Nm³/h as in Examples 1 and 2 above to lower the temperature of the exhaust gas to about 500°C. The exhaust gas was then introduced into the plate-type heat exchanger 12 so as to exchange heat with air at normal temperature flowing in about 13,130 Nm³/h. As a consequence, it was confirmed that preheating air at about 350°C was obtained but its temperature was hard to be increased even by an enlargement of the heat transfer surface because of the low exhaust gas temperature at the inlet of the heat exchanger 12.

On the contrary, in Example 1 and Example 2, it was possible to obtain the average temperatures of the preheating air during the reduction operation at 227°C and 375°C, respectively, with the heat transfer area of 40 m². Moreover, the sufficiently high exhaust gas temperature at the inlet of the heat exchanger 2 allows the preheating air temperature to be further raised by enlargement of the heat transfer surface. Specifically, Both enlargement of the heat transfer area to about 75 m² in Example 1 and enlargement of the heat transfer area to about 45 m² in Example 2 allows the preheating air temperature at 400°C to be easily obtained.

In addition, in Example 1 and Example 2, the refractory applied so as to cover the metal surface (specifically, the inner surface of the duct main body of the refractory duct 3 and the inner surface of the exhaust gas cooling tower 4) facing the exhaust gas flow channel from the outlet of the heat exchanger 2 to the outlet of the exhaust gas cooling tower 4 prevented a corrosion of the metal surface regardless of the continuous operation over a period as long as 380 days. In contrast to this, in the comparative example where the refractory to cover the metal surface is not applied to the water-cooled duct 13 and the exhaust gas cooling tower 4, corrosion occurred on the metal surface (the metal surface that comes in direct contact with the exhaust gas). This corrosion is acid corrosion and is assumed to have occurred in a region where the exhaust gas temperature locally dropped below the dew point of acid due to a drift or the like of the exhaust gas.

The comparison between Examples 1 through 4 and Comparative Example 1 obviously shows the following. In the conventional exhaust gas cooling system with no refractory applied to the heat transfer surface of the heat exchanger and the heat transfer surface exposed, the temperature of the exhaust gas to be introduced into the heat exchanger is required to be lowered in order to suppress adhesion of the dust or the like onto the heat transfer surface and corrosion of the heat transfer surface, which involves a problem of extreme decrease in the heat transfer efficiency in the heat exchanger. On the contrary, in the exhaust gas cooling system of the invention, the highly thermal conductive refractory applied so as to cover the heat transfer surface makes it possible to easily achieve both the suppression of adhesion to the heat transfer surface and corrosion of the heat transfer surface and maintenance or enhancement of the heat transfer efficiency.

As described above, an exhaust gas processing system of the invention comprises a radiant heat exchanger into which an exhaust gas exhausted from the rotary hearth type reducing furnace is introduced, the radiant heat exchanger including: an inner cylinder surrounding a space through which the exhaust gas flows; an outer cylinder disposed on an outer side in a radial direction of the inner cylinder to define a flow channel between the inner cylinder and the outer cylinder for allowing a coolant to flow through so as to exchange heat with the exhaust gas; and a highly thermal conductive refractory disposed so as to cover an inner surface of the inner cylinder. This system does not allow dust to adhere onto the highly thermal conductive refractory but weakly to be easily peeled off, in comparison with dust which adheres onto the inner surface in the conventional system in which the inner surface of the inner cylinder made of metal is exposed, thus preventing blockage due to the dust adhesion. In addition, the highly thermal conductive refractory can inhibit corrosive dust from coming into direct contact with the inner cylinder made of metal to prevent corrosive deterioration of the inner cylinder.

Furthermore, temporarily lowering the temperature of the surface of the highly thermal conductive refractory below the temperature of the surface during the reduction operation allows cracking to be generated in the dust layer adhering onto the surface to promote peeling thereof, thus facilitating the removal of the dust layer.

In addition, the refractory with high thermal conductivity does not deteriorate the overall heat transfer coefficient of the heat exchanger significantly. Moreover, forming a portion to come into direct contact with the exhaust gas with the refractory having higher upper temperature limit than metals allows the temperature of the exhaust gas introduced into the heat exchanger to be higher, thus enabling a heat transfer rate between the exhaust gas and air to be as high as or rather higher than the conventionally achievable rate. This also enables an effective utilization of the sensible heat of the exhaust gas for preheating air for burner combustion in the rotary hearth type reducing furnace.

Furthermore, the refractory, which suppresses corrosion of the inner cylinder and troubles caused by adhesion of dust onto the inner cylinder, can provide effects such as extension of life of the facility, enhancement of productivity resulting from an increase of the operating rate, a reduction in driving costs owing to a reduction in a heat loss, and a reduction in the maintenance costs.

Moreover, these effects, which can be achieved by merely application of the highly thermal conductive refractory to the inner side of the inner cylinder of the existing heat exchanger, require no additional facility such as a waste heat boiler inside the furnace which increases the facility costs.

As the highly thermal conductive refractory, a highly thermal conductive refractory mainly containing any one of SiC, ZrB₂, and BN is suitable. A silicon carbide refractory mainly containing SiC is particularly preferable. Further, a silicon carbide refractory with an SiC content of 60% or more by mass can ensure high heat transfer efficiency.

In the exhaust gas processing system, the temperature of the exhaust gas to be introduced into the heat exchanger is allowed to be high to increase the heat recovery ratio. Specifically, the system preferably comprises heat exchanger inlet gas temperature control means for controlling a temperature of the exhaust gas at an inlet of the heat exchanger to be a target temperature of 1100°C or above. Further, it is more preferable that the heat exchanger inlet gas temperature control means controls the temperature of the exhaust gas at the inlet of the heat exchanger to be the target temperature of 1200°C or above.

For example, the heat exchanger inlet gas temperature control means controls the temperature of the exhaust gas at the inlet of the heat exchanger by introducing air or a cooled exhaust combustion gas into the exhaust gas from the rotary hearth type reducing furnace.

Further, in a system comprising an exhaust gas cooling tower provided at a latter stage of the heat exchanger to forcibly cool the exhaust gas exhausted from an outlet of the heat exchanger, the forced cooling can effectively suppress synthesis (resynthesis) of dioxins.

Furthermore, in a system comprising a refractory duct from the outlet of the heat exchanger to the exhaust gas cooling tower, the refractory duct including a duct main body made of metal and a refractory applied so as to cover at least a part of an inner surface of the duct main body, the refractory can prevent both high-temperature corrosion and acid corrosion of the duct main body.

The invention also provides an exhaust gas processing method for processing an exhaust gas exhausted from a rotary hearth type reducing furnace, including introducing the exhaust gas exhausted from the rotary hearth type reducing furnace into a heat exchanger for heat exchange between the exhaust gas and air to preheat the air, wherein the heat exchanger is a radiant heat exchanger that includes: an inner cylinder surrounding a space through which the exhaust gas flows; an outer cylinder disposed on an outer side in a radial direction of the inner cylinder to define a flow channel between the inner cylinder and the outer cylinder for allowing the air to flow therethrough; and a highly thermal conductive refractory disposed so as to cover an inner surface of the inner cylinder.

In this method, a temperature of the exhaust gas at an inlet of the heat exchanger is preferably controlled to be a target temperature of 1100°C or above, and more preferably of 1200°C or above.

Also, it is preferable that the heat exchanger performs a heat exchange between the exhaust gas and the air to lower an exhaust gas temperature at an outlet of the heat exchanger to a temperature of 600°C or above and the method further comprises forcibly cooling the exhaust gas to lower the temperature thereof from 600°C to 200°C within 5 seconds by introducing the exhaust gas exhausted from the heat exchanger into an exhaust gas cooling tower.

## Claims

1. An exhaust gas processing system for processing an exhaust gas exhausted from a rotary hearth type reducing furnace, comprising:
a radiant heat exchanger configured to perform a heat exchange between the exhaust gas exhausted from the rotary hearth type reducing furnace and air,
wherein the radiant heat exchanger includes:
an inner cylinder made of metal surrounding a space through which the exhaust gas flows;
an outer cylinder disposed on an outer side in a radial direction of the inner cylinder to define a flow channel between the inner cylinder and the outer cylinder for allowing the air therethrough so as to exchange heat with the exhaust gas; and
a highly thermal conductive refractory applied to an inner side of the inner cylinder so as to cover an inner surface of the inner cylinder.

2. The exhaust gas processing system for the rotary hearth type reducing furnace according to claim 1, wherein:
the highly thermal conductive refractory contains any one of SiC, ZrB₂, and BN as a main constituent.

3. The exhaust gas processing system for the rotary hearth type reducing furnace according to claim 2, wherein:
the highly thermal conductive refractory is a silicon carbide refractory containing SiC as the main constituent.

4. The exhaust gas processing system for the rotary hearth type reducing furnace according to claim 3, wherein:
an SiC content in the silicon carbide refractory is 60% or greater by mass.

5. The exhaust gas processing system for the rotary hearth type reducing furnace according to any one of claims 1 through 4, further comprising:
heat exchanger inlet gas temperature control means for controlling a temperature of the exhaust gas at an inlet of the heat exchanger to be a target temperature of 1100°C or above.

6. The exhaust gas processing system for the rotary hearth type reducing furnace according to claim 5, wherein:
the heat exchanger inlet gas temperature control means controls the temperature of the exhaust gas at the inlet of the heat exchanger to be a target temperature of 1200°C or above.

7. The exhaust gas processing system for the rotary hearth type reducing furnace according to claim 5 or 6, wherein:
the heat exchanger inlet gas temperature control means controls the temperature of the exhaust gas at the inlet of the heat exchanger by introducing air into the exhaust gas from the rotary hearth type reducing furnace.

8. The exhaust gas processing system for the rotary hearth type reducing furnace according to claim 5 or 6, wherein:
the heat exchanger inlet gas temperature control means controls the temperature of the exhaust gas at the inlet of the heat exchanger by introducing a cooled exhaust combustion gas into the exhaust gas from the rotary hearth type reducing furnace.

9. The exhaust gas processing system for the rotary hearth type reducing furnace according to any one of claims 1 through 8, further comprising:
an exhaust gas cooling tower provided at a latter stage of the heat exchanger to forcibly cool the exhaust gas exhausted from an outlet of the heat exchanger.

10. The exhaust gas processing system for the rotary hearth type reducing furnace according to claim 9, further comprising:
a refractory duct from the outlet of the heat exchanger to the exhaust gas cooling tower,
wherein the refractory duct includes a duct main body made of metal and a refractory applied so as to cover at least a part of an inner surface of the duct main body.

11. A method of peeling dust adhering onto a heat transfer surface in the exhaust gas processing system for the rotary hearth type reducing furnace set forth in any one of claims 1 through 10, comprising:
temporarily lowering a temperature of the surface below a temperature of the surface during a reducing operation to generate cracking which promotes peeling of a dust layer adhering onto a surface of the highly thermal conductive refractory, in the dust layer.

12. An exhaust gas processing method for processing an exhaust gas exhausted from a rotary hearth type reducing furnace, comprising:
introducing the exhaust gas exhausted from the rotary hearth type reducing furnace into a heat exchanger for performing a heat exchange between the exhaust gas and air to preheat the air,
wherein the heat exchanger is a radiant heat exchanger that includes:
an inner cylinder surrounding a space through which the exhaust gas flows;
an outer cylinder disposed on an outer side in a radial direction of the inner cylinder to define a flow channel between the inner cylinder and the outer cylinder for allowing the air to flow therethrough; and
a highly thermal conductive refractory disposed so as to cover an inner surface of the inner cylinder.

13. The exhaust gas processing method for the rotary hearth type reducing furnace according to claim 12, further comprising:
controlling a temperature of the exhaust gas at an inlet of the heat exchanger to be a target temperature of 1100°C or above.

14. The exhaust gas processing method for the rotary hearth type reducing furnace according to claim 13, wherein:
the target temperature of the temperature of the exhaust gas at the inlet of the heat exchanger is 1200°C or above.

15. The exhaust gas processing method for the rotary hearth type reducing furnace according to any one of claims 12 through 14, wherein:
the heat exchanger performs heat exchange between the exhaust gas and the air so as to lower an exhaust gas temperature at an outlet of the heat exchanger to a temperature that is 600°C or above but lower than an exhaust gas temperature at an inlet of the heat exchanger; and
the method further comprises forcibly cooling the exhaust gas to lower the temperature thereof from 600°C to 200°C within 5 seconds by introducing the exhaust gas exhausted from the heat exchanger into an exhaust gas cooling tower.
